# EUROPEAN PATENT APPLICATION

(11) **EP 1 582 486 A1**
(43) Date of publication of application: **05.10.2005**
(21) Application number: 04388026.9
(22) Date of filing: 31.03.2004
(51) Int. Cl.: B65H 3/08, B65H 3/54, B27D 1/04, B32B 31/00, B65H 3/44, B65H 39/043

(54) **A suction head device for lifting an upper sheet of veneer from a stack of veneer sheets, and a veneered boards lamination apparatus**

(71) Applicant: Mercandia Industries A/S, 2300 Copenhagen S (DK)
(72) Inventor: Frederiksen, Claus, 3220 Tisvildeleje (DK); Kobaslic, Midhat, 2500 Valby (DK)
(74) Representative: Indahl, Peter Jensen

(57) **Abstract**

A suction head device (1) for lifting an upper sheet of veneer (14) from a stack of veneer sheets comprises a suction head (4), a suction head carrier (8) for positioning the suction head on top of the stack and for moving the suction head with attached veneer sheet away from the stack, and a sheet separating means. The sheet separating means is a pressure shoe (9) which is horizontally spaced apart from the suction head (4) and extends downward to a lower level than the suction head when said upper sheet of veneer (14) is separated from the stack.

## Description

The present invention relates in a first aspect to a suction head device for lifting an upper sheet of veneer from a stack of veneer sheets, and in a second aspect to a veneered boards lamination apparatus having such suction head devices.

In the first aspect the present invention relates more specifically to a suction head device for lifting an upper sheet of veneer from a stack of veneer sheets, the suction head device comprising a suction head, a suction head carrier for positioning the suction head on top of the stack and for moving the suction head with attached veneer sheet away from the stack, and a sheet separating means.

Such a suction head device is known from US patent 4,288,274 where suction heads are provided on two carriers that are mounted displaceable on elongate horizontal beams located one above the other so that veneer sheets can be picked up from two stacks located below and above, respectively, of a horizontal run for feeding rigid boards to be veneered. The sheet separating means is a horizontally directed air jet nozzle located next to the associated stack of veneer sheets. The air jet separates the veneer sheets from each other in case the suction head picks up more than one sheet of veneer. Such an air jet does not provide a sufficiently reliable separation of multiple veneer sheets picked up by the suction head device, especially not when veneer sheets of relatively small sizes are to be picked up. It is also a disadvantage that the veneered boards lamination apparatus can only handle a single row of veneer stacks, and that veneer sheets of only a single size can be handled.

US patent 3,463,483 describes a suction head device in an apparatus for manufacturing of plywood out of veneer sheets. Difficulties in removing only one sheet from a stack of veneer sheets are described, and it is proposed to lift only a single sheet by adjusting the vacuum pressure to a magnitude sufficient to hold a first sheet, but insufficient to hold a second sheet against the first sheet. It is a drawback of this device that the various sheets in a stack of veneer sheets have uneven properties, so it is impossible to obtain a reliable lifting of only a single sheet by adjusting the vacuum pressure.

A number of other veneered boards handling apparatuses are know, but they are all silent on the subject of lifting only a single sheet at a time. US patent 5,616,211 discloses a veneered boards lamination apparatus where a single row of veneer can be applied to the lower and upper face of a panel in a continuous process that can handle only a single size of panel. US patent 4,637,599 utilizes a suction-lifting conveyor with suction boxes having movable suction heads for lifting the sheets from a stack onto the lower side of the conveyor. US patent 4,466,856 describes an automatic veneer handling apparatus for assembling one row of veneer sheets into a continuous string of veneer.

An object of the present invention is to obtain a very reliable lifting of only a single sheet of veneer from a stack of veneer sheets.

With a view to this the above mentioned suction head device according to the present invention is characterized in that the sheet separating means is a pressure shoe which is horizontally spaced apart from the suction head and extends downward to a lower level than the suction head when said upper sheet of veneer is separated from the stack.

The lifting of the upper sheet of veneer is initiated when the suction head is positioned on top of the sheet and the vacuum pressure inside the suction head acts upon the upper surface of the sheet and pulls the sheet upwards into abutment against the lower side of the suction head. Then the suction head is lifted somewhat upwards and the area of the upper sheet sucked against the suction head participates in the upward movement of the suction head. In case the upper sheet is so porous that the vacuum pressure also effects a lifting action on the subjacent sheet that sheet will initially also have a tendency to be somewhat lifted in the area below the suction head. However, the pressure shoe will act with a downward force on the upper sheet and this will cause this sheet to bend somewhat upwards in the area between the pressure shoe and the suction head, because the pressure shoe will during the initial lifting maintain the upper sheet in contact with the stack in the area of the pressure shoe. The bending of the upper sheet creates in the area below the suction head a distance between the lower side of the upper sheet and the upper side of the subjacent sheet because the suction effect from the suction head through the upper sheet is insufficient to cause a similar bending of the subjacent sheet. The distance provides an air gap between the two sheet surfaces, and any suction action from the suction head is balanced out by the air available in the air gap with the result that the subjacent sheet is completely released from the suction head and remains in place in the stack while the upper sheet is lifted further off the stack during the continued lifting movement of the suction head.

The pressure shoe and the suction head are preferably mounted on a common carrier as this provides a carrier of simple design, and a suction head device which is simple to control because it can be moved as one unit. As an alternative it is, however, also possible to mount the pressure shoe on an individual carrier different from the carrier for the suction head.

The pressure shoe can in an embodiment be spring biased in the downward direction. The spring bias results in a downward force of a predefined size at every renewed lifting operation. And it allows the pressure shoe to be movable in relation to the suction head so that the two parts can be placed at even level on top of the upper sheet before the lifting is initiated. This improves the seating of the lower side of the suction head upon the upper sheet before the vacuum is applied and enhances the initial suction grip with only minimum losses of vacuum pressure.

In an alternative embodiment the pressure shoe is a spring one end of which is stationary mounted with respect to the suction head. The spring can be a helical compression spring carried on a guide with its upper end stationary mounted with respect to the suction head and a lower end for contacting the veneer sheet, or it can be a leaf spring an inner end of which is secured to the suction head so that a lower surface on the leaf spring can press down on the veneer sheet when the suction head is seated on top of the sheet.

It is possible to arrange the suction head and the pressure shoe with a quite large mutual separation of e.g. 20 cm in the horizontal direction, but preferably the horizontal spacing between adjacent sides of the suction head and the pressure shoe is in the range of 25 mm to 100 mm. When the spacing is at the most 100 mm the suction head device obtains a relatively compact design, and if the spacing is less than 25 mm the distance of free veneer between the two parts becomes so relatively short that too large forces are required for obtaining sufficient bending in the veneer sheet. The spacing is suitably in the range of 30 mm to 70 mm.

In the second aspect the present invention relates to a veneered boards lamination apparatus having a first station with suction heads devices for lifting sheets of bottom veneer onto a first conveyor transporting the bottom veneer sheets in a longitudinal direction to a second station with a board feeder for placing boards on top of the bottom veneer sheets, and then top veneer is placed on top of the boards. Such an apparatus is known from US patent 4,466,856. This apparatus is an automatic apparatus for continuous operation and it is as such very sensible to interruptions in the process caused by faulty lifting of veneer sheets. If two sheets are lifted together away from a stack manual intervention and a stop of operation are required. An additional problem in relation to the prior art apparatus is its inability to handle more than one size of sheets.

In order to improve the reliability of the apparatus and improve the capacity, the apparatus according to the present invention is characterized in that the first station includes a plurality (N) of veneer stacks and at least an equal number (N) of suction head devices according to any one of claims 1 to 5 located in a transverse direction of the first conveyor, that the second station includes at least a number (N) of positioning devices corresponding to the number of suction head devices in the first station, and that a top veneer feeder includes a number (N) of veneer stacks corresponding to the number of veneer stacks in the first station.

The suction head devices perform at each activation, as explained above, a very reliable lifting of only a single sheet of veneer from the individual veneer stack, an advantage that is in particular pronounced when simultaneous lifting of a plurality of sheets is effected from a row of veneer stacks. The capacity of the apparatus is improved by the laying up of a plurality of veneer sheets and boards in common operations, and the width of the row can be fully adapted to the width of a press that is used to join the veneer to the boards. Such a press can be located downstream of the conveyor.

In a preferred embodiment at least some of said suction head devices in the first station and some of said positioning devices in the second station are displaceable in the transverse direction of the first conveyor. By making the suction heads and positioning devices displaceable in the transverse direction the apparatus can be easily adapted to the production of veneered boards of different sizes without impairing the capacity of the apparatus and of the subsequent press. This is very advantageous when the veneered boards are furniture parts, such as component parts in kitchen furniture where e.g. shelf fronts are of much smaller size than e.g. cupboard sides.

Of course it is possible to make all suction heads and all positioning devices displaceable in the transverse direction, but in order to facilitate the operation of the apparatus preferably one of said suction head devices in the first station and one of said positioning devices in the second station are stationary in the transverse direction of the first conveyor, the other of said devices in the first and second stations being displaceable in the transverse direction of the first conveyor.

A single conveyor can be used for the complete apparatus. The capacity of the apparatus can, however, be improved by making the apparatus so that said first conveyor extends from the first station to the second station, and that a second conveyor is located in extension of said first conveyor. This allows operation of the second conveyor for feeding the assembled boards veneer sheets towards a press while new sets of boards and veneer sheets are assembled on the first conveyor.

In order to simplify the construction and the operation of the apparatus it is preferably designed so that said suction head devices in the first station are mounted on a common carrier beam extending in the transverse direction of the first conveyor, said carrier beam having a beam drive for displacing the beam in the vertical direction and for displacing the beam in the longitudinal direction of the first conveyor.

In an embodiment the board feeder in the second station extends above and in the transverse direction of the first conveyor, the board feeder comprising two mutually parallel carriers having support members for the boards, said carriers being mutually displaceable in the longitudinal direction of the first conveyor for release of the boards from the board feeder. The parallel carriers with support members deliver the plural boards in one operation and in a reliable and precise manner which ensures a well-defined positioning of the boards on top of the bottom veneer sheets that are located on the conveyor below the parallel carriers.

The apparatus can in an embodiment include a control unit controlling the lifting action of the suction head devices in the first section. The control unit preferably includes an electronic control unit that can be programmed. It is e.g. possible to store a number of preset vacuum levels in such a control unit for subsequent selection in dependency of the sizes of the veneer sheets to be lifted. When the operator of the apparatus runs production of a new size of veneered boards appropriate vacuum pressures can be found and stored, and when a series of the same size of veneered boards is to be manufactures all that is required is a selection of the previously used control parameters.

Examples of embodiments of the present invention is described in greater detail in the following with reference to the highly schematic drawings, in which
Fig. 1 depicts a vertical section through a suction head device according to the invention,
Figs. 2 and 3 are similar views of a second and third embodiment of the suction head device,
Figs. 4 to 6 depict a fourth embodiment illustrating the lifting procedure,
Fig. 7 depicts a fifth embodiment of the suction head device,
Fig. 8 is a side view of a veneered boards lamination apparatus according to the invention,

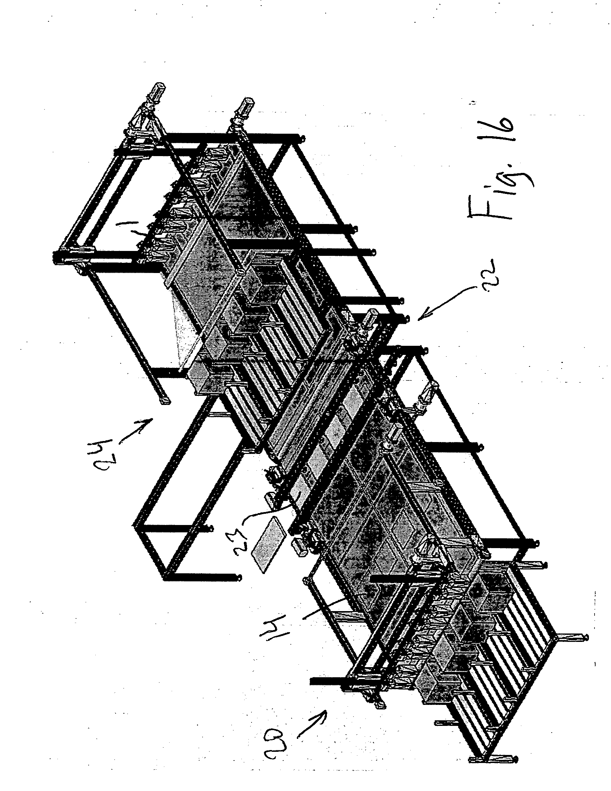

Figs. 9 to 16 are perspective views of the apparatus in Fig. 8 showing various steps in a lamination procedure,
Fig. 17 is a top view of an apparatus according to the invention,
Fig. 18 is a perspective view of a support member for a board feeder in the apparatus of Fig. 8, and
Fig. 19 is an end view of such a board feeder.

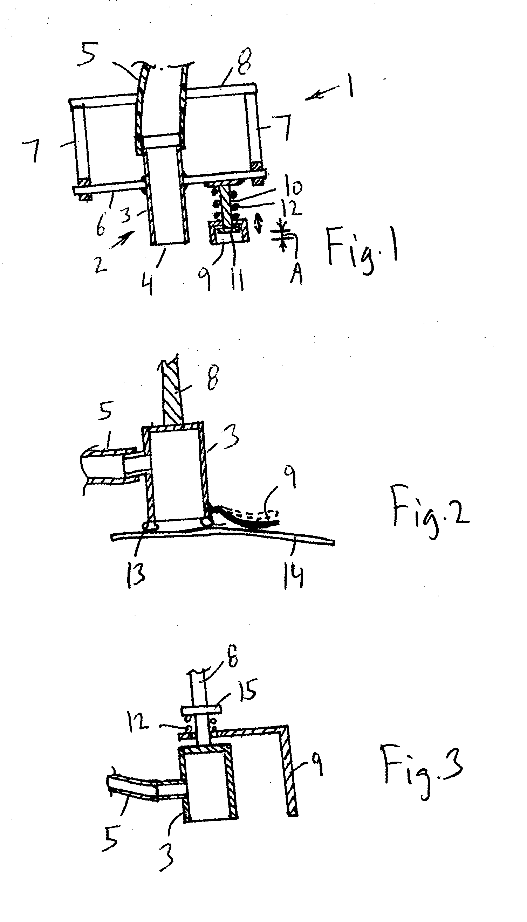

The first embodiment of a suction head device, generally designated 1 in Fig. 1, includes a suction head 2 shaped as a cylindrical pipe 3 which is open ended at its lower end in order to present a suction opening 4 facing downwards. The rim of the opening is annular and is positioned in a plane perpendicular to the longitudinal centre axis of the pipe 3. The flat annular end of the pipe can abut a sheet of veneer and be sucked against the sheet when vacuum pressure is applied to the upper end of the pipe via a hose 5 which is mounted around the upper end of the pipe in a pressure tight manner.

A flow control valve 6 is mounted inside the pipe 3 in order to reduce loss of vacuum in case no veneer sheet is present below the pipe when the vacuum pressure is applied to the pipe. The flow control valve can be embodied as a circular disk of a diameter corresponding to the inner diameter of the pipe. The circular disk has a rod-shaped, diagonally extending tilt axle, the ends of which is journalled in the wall of the pipe. To one side of the tilt axle the circular disk is slightly more heavy than to the other side so that the heavier side of the circular disk will turn downwards inside the pipe 3 when no or only small amounts of air flows through the pipe. However, as soon as the airflow in the pipe 3 increases above a threshold velocity the airflow will cause the circular disk to turn to a mainly horizontal position in which the flow control valve is closed. It is of course possible to make the suction head device without such a flow control valve, but the valve provides the advantage that unintended loss of vacuum is prevented and energy to produce vacuum pressure is saved.

A horizontal plate or rod 6 is fixed to the outside of pipe 3, and the ends of the rod are journalled in arms 7 on a suction head carrier 8 with a possibility for rotating with respect to the arms when these are swung about the longitudinal axis of carrier 8, which by a drive (not shown) can swing the suction head between several positions. In one position, the pickup position, the annular end of pipe 3 abuts the upper side of a the uppermost sheet of veneer in a stack of veneer sheets, and vacuum is applied to suck the sheet fixedly to the pipe, and in another position the suction head device has lifted the sheet of veneer to a delivery position where the vacuum pressure is relieved and the suction head device releases the sheet and can be lifted away therefrom.

A pressure shoe 9 is mounted on a vertical rod 10, which is fixed to the plate or rod 6. Vertical rod 10 extends through a central opening in the upper end of pressure shoe 9 and terminates in an end stop 11 located inside the pressure shoe. A compression spring 12 urges the pressure shoe downwards. Then the suction head device is placed on top of a veneer sheets the pressure shoe is pressed upwards under simultaneous compression of spring 12 so that the lower side of the pressure shoe is located at the same level as the lower annular end of pipe 3. During the initial lifting of the sheet the pressure shoe moves downwards on rod 10 to a lower level than the suction head because of the pressure force from spring 12, so that only a single sheet of veneer is lifted. In its lowermost position the underside of the pressure shoe is positioned at a distance A below the lower rim of pipe 3. This distance A can preferably be in the range from 2 mm to 50 mm, depending on the horizontal separation between the pipe and the pressure shoe and the thickness of the sheet of veneer. A suitable range is from 3 to 25 mm. It is possible to make the distance adjustable in order to be able to adapt the suction head device to lifting of different types of veneer sheets. This can e.g. be done by providing vertical rod 10 with an external threading at its lower end and by using a nut screwed onto the treading instead of a fixed end stop 11.

In the various embodiments the same reference numerals are used for details having the same function, and only differences between the embodiments are described.

In the second embodiment in Fig. 2 the suction head device is provided with a sealing member 13 along the lower annular rim. The sealing member can be a ring of soft rubber or another pliable material, it can be an air-filled ring, or it can be a seal, e.g. a lip seal. The suction head carrier is a vertical rod fixed to a closed upper end bottom of pipe 3. The hose 5 is connected to a branch piece extending in the transverse direction of the pipe. The pressure shoe 9 is made as a leaf spring the inner end of which is fixed to pipe 3 near the lower end thereof so that the leaf spring extends from the pipe in a downward direction to a level below the sealing member when the spring is unloaded. When the suction head device is placed op top of a stack of veneer the leaf spring is urged upwards to the position shown in broken lines. When a veneer sheet 14 is lifted the leaf spring bends the sheet downwards as shown in Fig. 2.

In Fig. 3 the suction head device has a pressure shoe 9 in the form of a L-shaped bracket which is mounted on the carrier 8 in that the rod shaped carrier passes through a bore in an eye shaped portion in the end of the mainly horizontal leg of the bracket, the mainly vertical leg of which extends to a lower end located at a level below the lower rim of the suction head when a compression spring 12 has pressed the bracket downwards into abutment on the end bottom of pipe 3. The compression spring is located between the upper side of the eye shaped portion and a spring guide 15 affixed to the rod-shaped suction head carrier 8.

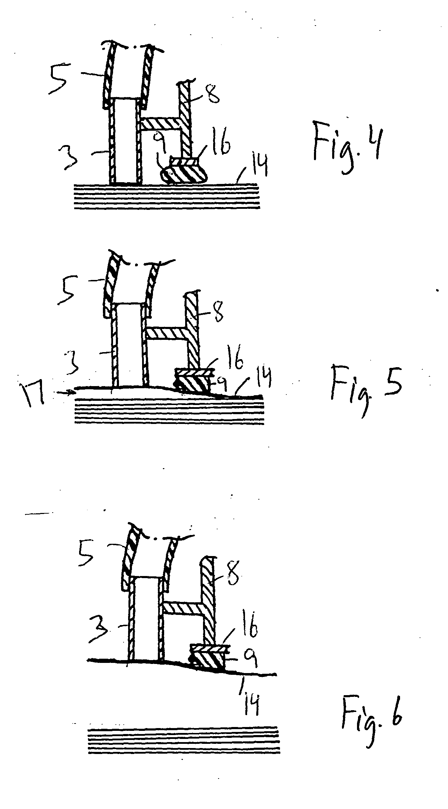

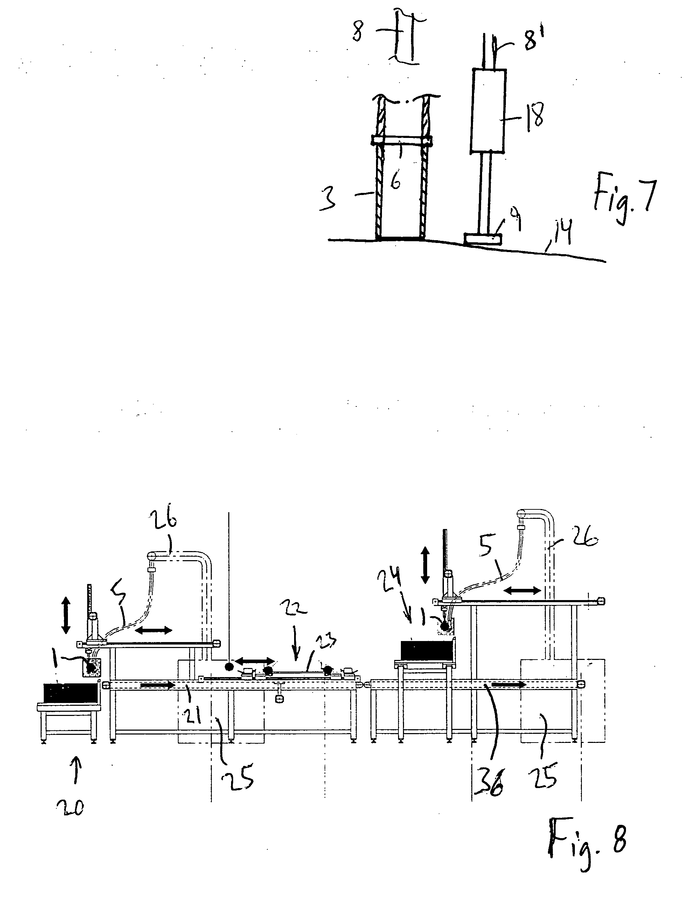

In the fourth embodiment shown in Figs. 4 to 6 pipe 3 is mounted to a branch rod on the rod-shaped suction head carrier 8, which at its lower end carries a plate member 16. The pressure shoe 9 is a resilient pad fixed to the lower side of the plate member. This lower side is located at a level above the annular rim of the pipe, and the resilient pad has in its unloaded state such a height that it extends down to a level below said annular rim. When the suction head device is seated on top of a veneer sheet the resilient pad is compressed so that the lower side of the pad is level with the annular rim, as shown in Fig. 4. During the initial lifting of the sheet the pad expands in the downwards direction and causes bending of the sheet, as shown in Fig. 5. Because of this bending of the sheet a gap 17 is created below tube 3 and only a single sheet can be lifted off the stack as shown in Fig. 6.

In Fig. 7 the pressure shoe 9 is mounted at the lower end of a pneumatic cylinder 18 which can be actuated to press down onto the veneer sheet 14. In the above mentioned embodiments the pressure shoe and the suction head are mounted on a common carrier 8. It is, however, also possible to mount the pressure shoe on a carrier 8' that is independent from the suction head carrier 8. This can e.g. be an advantage in case the pressure shoe is kept in vicinity of the stack when the suction head moves the sheet of veneer away from the stack.

Details of the various embodiments of the suction head device can be combined into new embodiments within the scope of the claims.

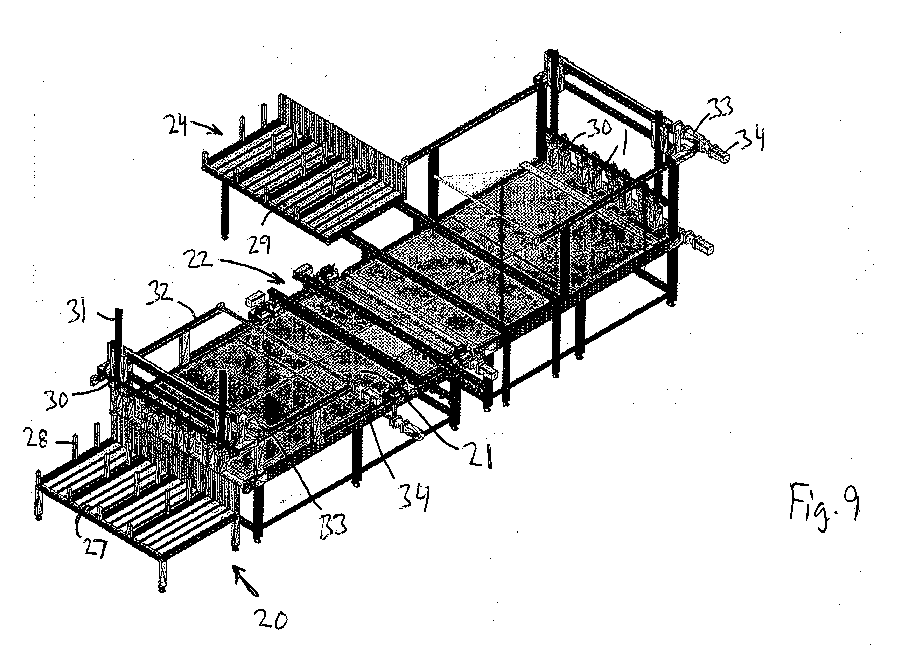

A veneer boards lamination apparatus is illustrated in Fig. 8. In this apparatus a laminated board is built up of a sheet of bottom veneer, a board and a sheet of top veneer. It is of course also possible The sheets are glued onto the board and the board and sheets proceeds from the apparatus into a press for producing the final product.

The apparatus has a first station 20 in which suction head devices of the above mentioned kind lift the bottom sheets onto a first conveyor 21. In a second station 22 boards 23 are placed on top of the bottom veneer. Top veneer sheets are provided by a top veneer feeder 24 having suction head devices of the above mentioned kind. At the first station and at the top veneer feeder a vacuum pressure source 25 supplies an upstanding distribution pipe 26 with vacuum pressure. The flexible hoses 5 are connected to distribution pipes 26.

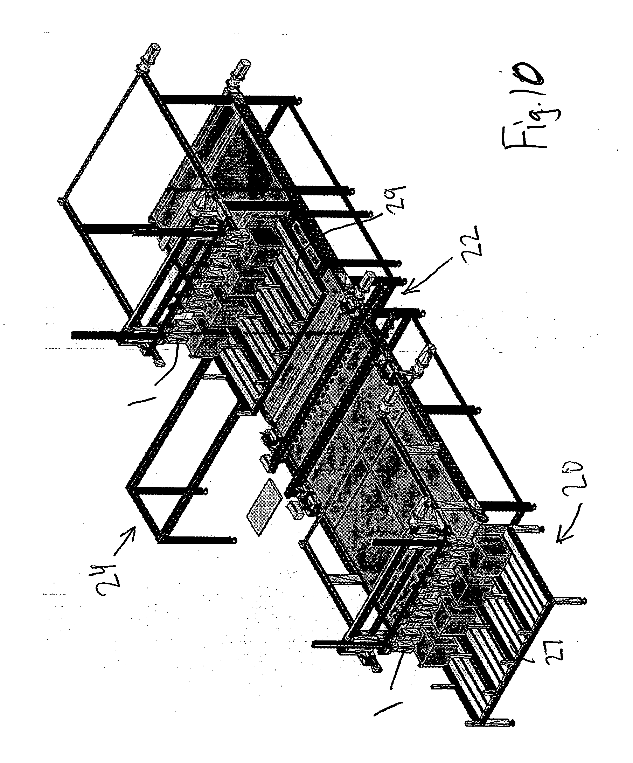

Fig. 9 illustrates the apparatus prior to the loading of veneer stacks. The stacks of bottom veneer and top veneer are adapted to one another so that veneer sheets of the same size are placed in stacks having the same position in the transverse direction of the conveyor. The veneer sheets come in different sizes, and it is an advantage of the apparatus that it is possible to easily adjust the apparatus to the various sizes. It is even possible to make laminated boards of different sizes in the same production run of the apparatus. When a particular production run is to be initiated it is firstly decided which sizes and how many stacks the run is to include. With a conveyor width of e.g. 4.4 metres it is possible to use up to 8 stacks in parallel. A cassette 27 for stacks in the first station is prepared with dividing walls, which can be upstanding bars 28 locked into the desired transverse position in an array of locking holes. A cassette 29 in the top veneer feeder is provided with a similar arrangement of dividing walls. Then the stacks of veneer are loaded into the cassettes.

An array of suction head devices 1 is provided on a common carrier beam 30 in the first station. The suction head devices 1 are locked in positions in the transverse direction of the conveyor in dependency of the positions of the dividing walls in cassette 27, namely so that each suction head device can be seated on top of the associated veneer stack. The suction heads in the top veneer feeder is in a similar manner positioned correctly in the transverse direction, viz. they are set in the same position in the transverse direction as the suction head devices in the first station. The common carrier beam can be displaced in the vertical direction on vertical guides 31 by a drive 33 and in the horizontal direction on horizontal guides 32 by a drive 34. The same applies to the common carrier beam in the top veneer feeder.

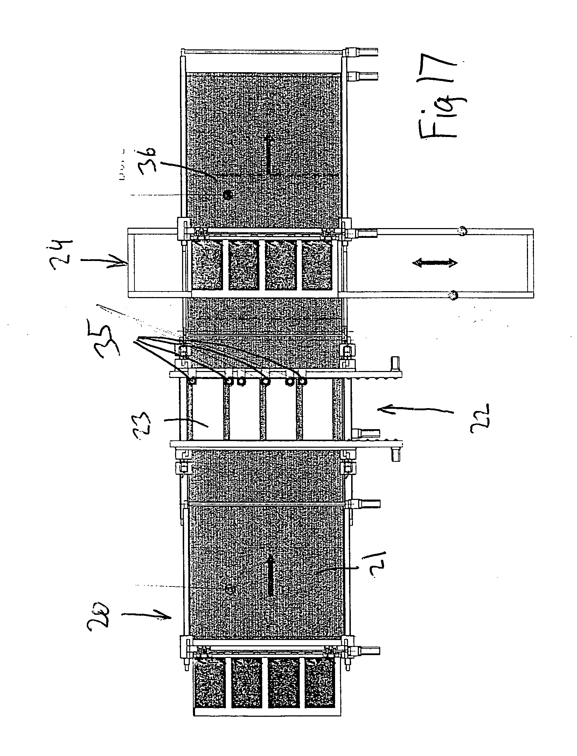

In the second station 22 a number of positioning devices 35 (Fig. 17) corresponding to the number of veneer stacks in the first station are locked in positions in the transverse direction of the conveyor in dependency of the positions of the dividing walls in cassette 29 (or 27). These positioning devices 35 are used to position the boards correctly in the transverse direction of the conveyor.

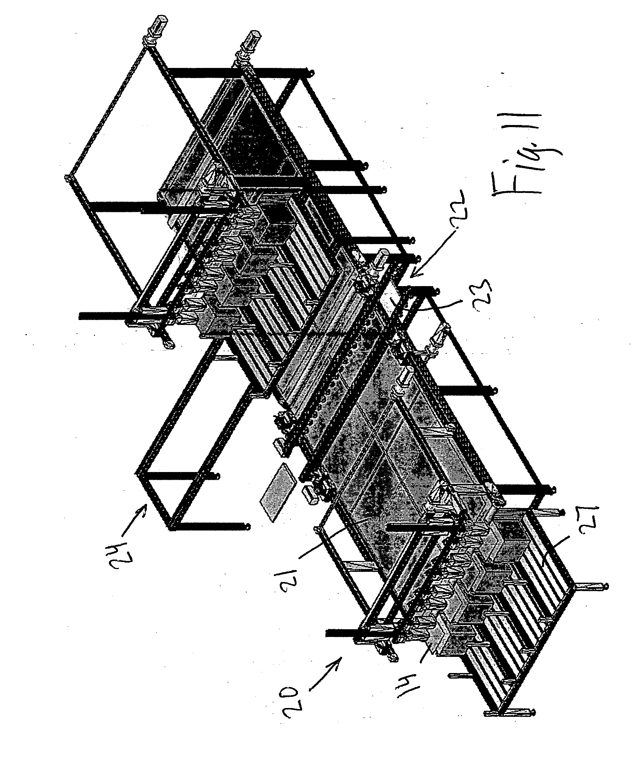

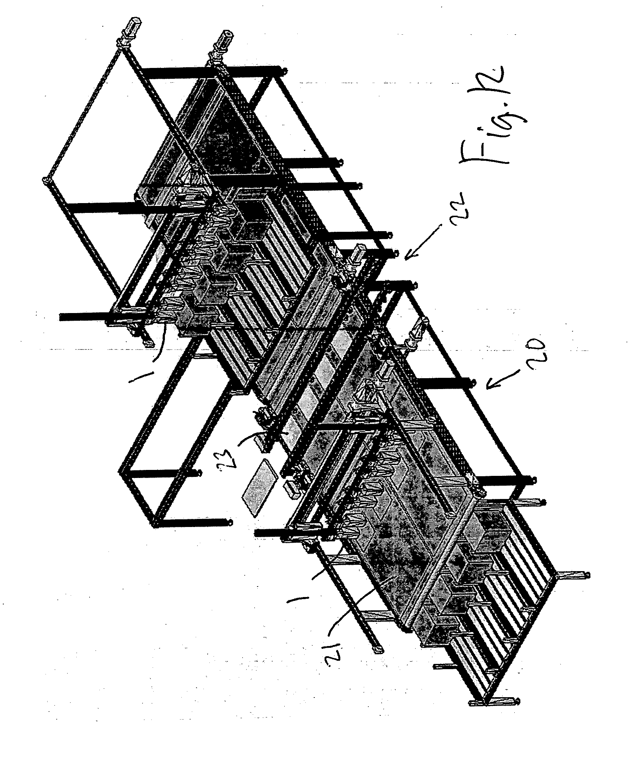

Then the production run is initiated. As shown in Fig. 10 the suction head devices in the first station are moved to the pickup position with one device located on top of each pertaining stack of veneer. Each device has a suction head and a pressure shoe. The bottom veneer sheets are lifted, and at the same time boards 23 provided with glue on their lower and upper surfaces begin to be loaded into the second station 22 (Fig. 11).

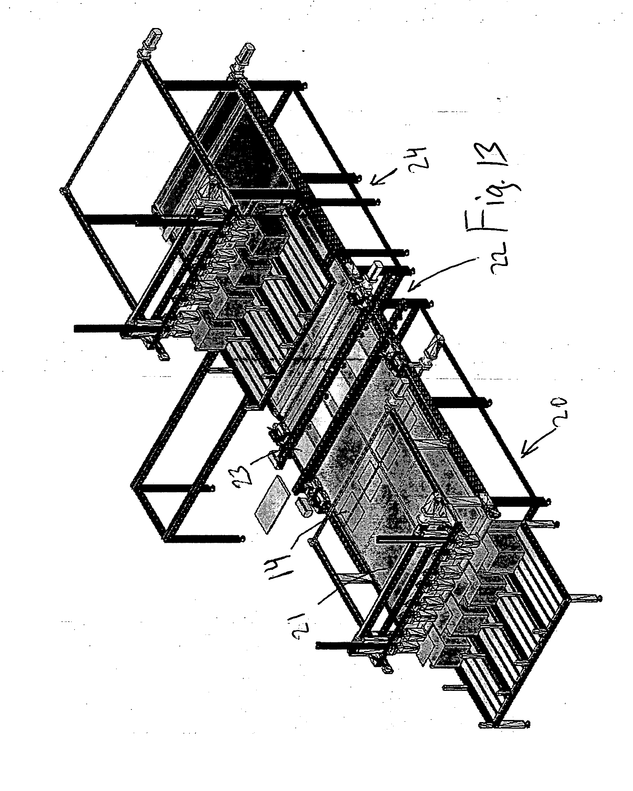

The common carrier beam in the first station is moved forwards on the conveyor to the delivery position shown in Fig. 12, and the bottom veneer sheets are released onto the conveyor. The second station is filled with the required boards (Fig. 12).

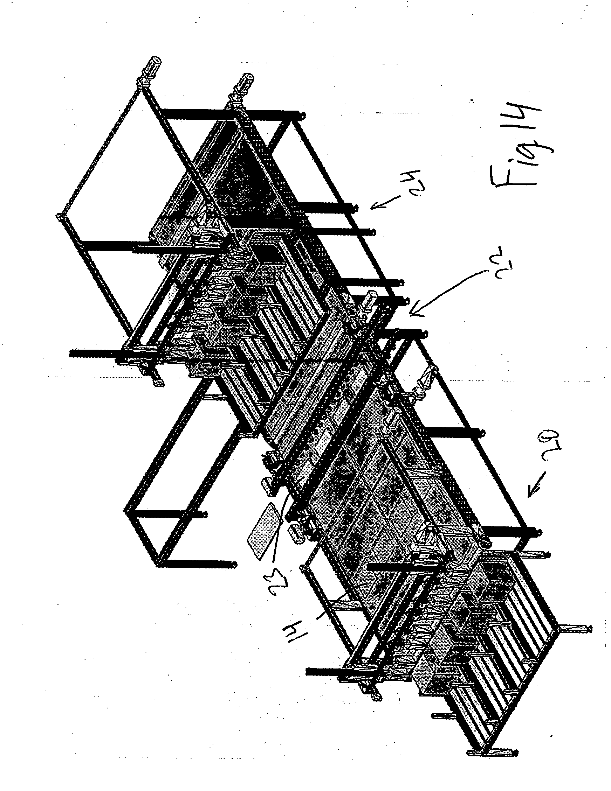

While the first conveyor moves the bottom veneer forwards to be positioned in the first station, the common carrier beam in the first station returns to the pickup position and grab a new array of bottom veneer sheets (Fig. 13). While these sheets are placed onto the first conveyor, the second station lets go of the boards, and they drop down onto the bottom veneer sheets (Fig. 14).

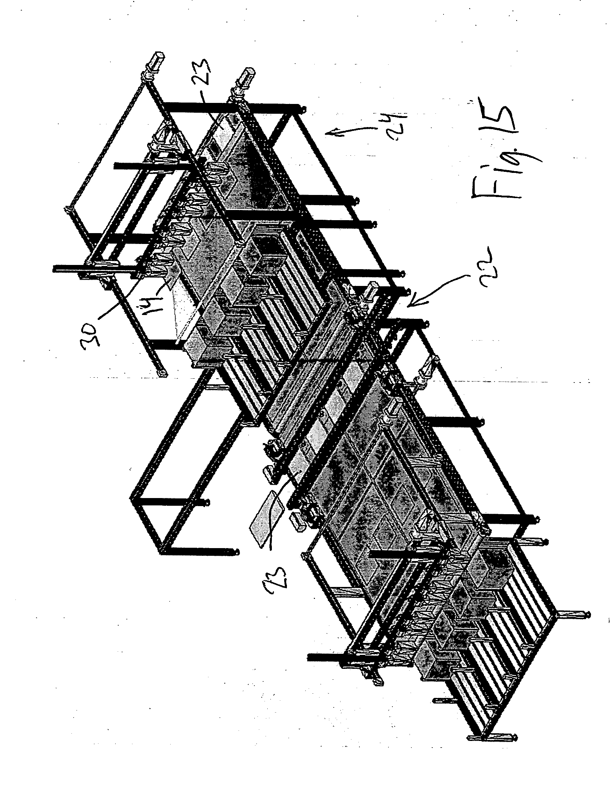

A second conveyor 36 transports the bottom veneered boards onwards to the forward end of the apparatus and at the same time the top veneer feeder pickup an array of top veneer sheets from cassette 29 and moves towards the boards. A new array of boards is also loaded into the second station (Fig. 15).

The common carrier beam in the top veneer feeder places top veneer sheets onto the boards at the forward end of the apparatus, and then the second conveyor is activated to move the boards further on into a feeder device for the press (not shown).

In the embodiment shown in Fig. 17 the cassette 29 can be displaced to the opposite side of the conveyor than shown in the previous figures. The positioning devices 35 in the second station can be shifted in the transverse direction of the conveyor along a carrier for support members 37 for the boards. Each positioning device 35 can be pneumatic cylinder having an actuation rod that can be displaced in the vertical direction between an inactive position in which boards can pass in the transverse direction below the rod and an active position where the boards cannot pass. The positioning devices are activated sequentially so that every time a board has been positioned the next positioning device in the array is set to its active position for blocking passage of the subsequent board.

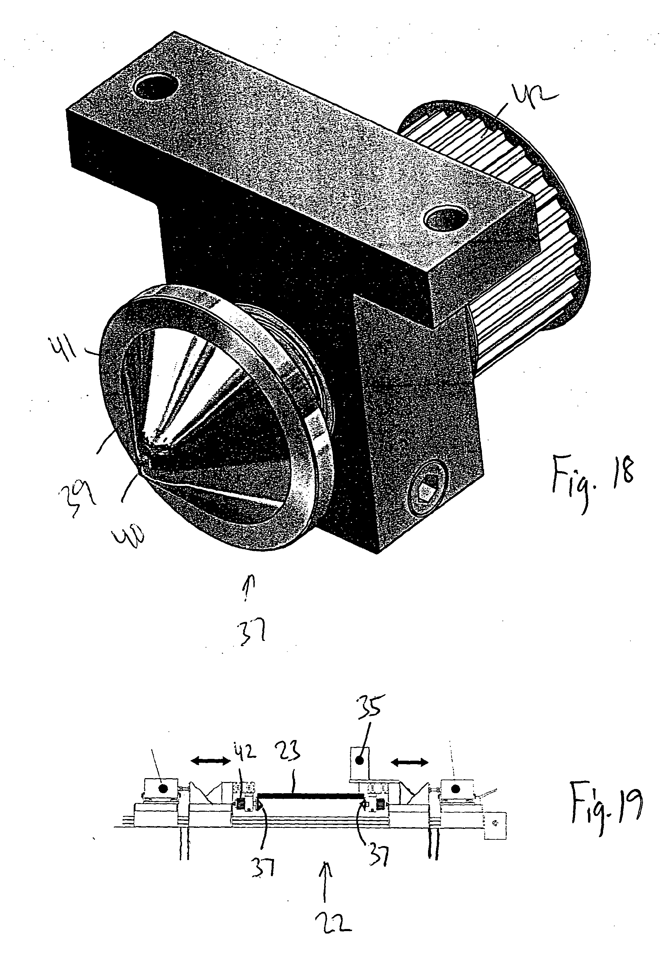

The board feeder in the second station has two mutually parallel carriers 38 extending in the transverse direction above the conveyor 21. The support member is seen in closer detail in Fig. 18. The individual support member 37 has a cone shaped central area 39 and it is mounted in the carrier with the apex 40 of the cone pointing towards an associated support member in the opposite carrier. The cone of the support member ends in an annular rim 41. On the side of the carrier opposite the cone the support member has a drive wheel 42 which engages a drive belt which is common to all support members on the carrier. As shown in Fig. 19 the two carriers can be mutually displaced in the longitudinal direction of the conveyor so that the distance between the carriers can be varied.

When boards 23 are fed into the second station the distance between the carriers is set so that the width of the boards is larger than the distance between the opposed apexes 40 but smaller than the distance between the rims 41 on the opposed support members. Prior to releasing the boards, the two carriers are moved towards one another until the distance between the rims of the opposed support members correspond to the width of the boards. This ensures a very precise positioning of the boards in the longitudinal direction of the conveyor in relation to the bottom veneer located below on the conveyor. Then the two carriers are moved apart and the boards drop down onto the bottom veneer sheets.

An array of boards of different widths can be placed on top of bottom veneer sheets by feeding and releasing the boards one at the time or several boards of the same width in one go and then one or more boards of a different width.

It is in an embodiment possible to adjust the vacuum pressure in the vacuum pressure sources 25, and preferably the values found to be useful in relation to a particular run can be stored in an electronic control unit.

The suction head devices can also be utilized in an apparatus for building up plywood from sheets of veneer.

## Claims

1. A suction head device for lifting an upper sheet of veneer from a stack of veneer sheets, the suction head device comprising a suction head, a suction head carrier for positioning the suction head on top of the stack and for moving the suction head with attached veneer sheet away from the stack, and a sheet separating means, **characterized in that** the sheet separating means is a pressure shoe which is horizontally spaced apart from the suction head and extends downward to a lower level than the suction head when said upper sheet of veneer is separated from the stack.

2. A suction head device according to claim 1, **characterized in that** the pressure shoe and the suction head are mounted on a common carrier.

3. A suction head device according to claim 1 or 2, **characterized in that** the pressure shoe is spring biased in the downward direction.

4. A suction head device according to claim 1 or 2, **characterized in that** the pressure shoe is a spring one end of which is stationary mounted with respect to the suction head.

5. A suction head device according to any one of claims 1 to 4, **characterized in that** the horizontal spacing between adjacent sides of the suction head and the pressure shoe is in the range of 25 mm to 100 mm, preferably in the range of 30 mm to 70 mm.

6. A veneered boards lamination apparatus having a first station with suction heads devices for lifting sheets of bottom veneer onto a first conveyor transporting the bottom veneer sheets in a longitudinal direction to a second station with a board feeder for placing boards on top of the bottom veneer sheets, and then sheets of top veneer is placed on top of the boards, **characterized in that** the first station includes a plurality (N) of veneer stacks and at least an equal number (N) of suction head devices according to any one of claims 1 to 5 located in a transverse direction of the first conveyor, that the second station includes at least a number (N) of positioning devices corresponding to the number of suction head devices in the first station, and that a top veneer feeder includes a number (N) of veneer stacks corresponding to the number of veneer stacks in the first station.

7. A veneered boards lamination apparatus according to claim 6, **characterized in that** at least some of said suction head devices in the first station and some of said positioning devices in the second station are displaceable in the transverse direction of the first conveyor.

8. A veneered boards lamination apparatus according to claim 6 or 7, **characterized in that** one of said suction head devices in the first station and one of said positioning devices in the second station are stationary in the transverse direction of the first conveyor, the other of said devices in the first and second stations being displaceable in the transverse direction of the first conveyor.

9. A veneered boards lamination apparatus according to any one of claims 6 to 8, **characterized in that** said first conveyor extends from the first station to the second station, and that a second conveyor is located in extension of said first conveyor.

10. A veneered boards lamination apparatus according to anyone of claims 6 to 9, **characterized in that** said suction head devices in the first station are mounted on a common carrier beam extending in the transverse direction of the first conveyor, said carrier beam having a beam drive for displacing the beam in the vertical direction and for displacing the beam in the longitudinal direction of the first conveyor.

11. A veneered boards lamination apparatus according to anyone of claims 6 to 10, **characterized in that** the board feeder in the second station extends above and in the transverse direction of the first conveyor, the board feeder comprising two mutually parallel carriers having support members for the boards, said carriers being mutually displaceable in the longitudinal direction of the first conveyor for release of the boards from the board feeder.

12. A veneered boards lamination apparatus according to claim 11, **characterized in that** the support members are cone shaped in a central area and mounted in the carrier with the apex of the cone pointing towards an associated support member in the opposite carrier.

13. A veneered boards lamination apparatus according to claim 12, **characterized in that** the cone of the support member extends to an annular rim acting as an end stop for the boards in the longitudinal direction of the first conveyor.

14. A veneered boards lamination apparatus according to any one of claims 10 to 13, **characterized in that** each support member has a drive wheel, preferably a toothed drive wheel engaging with a drive belt which is suitably common to all supports members on the carrier.

15. A veneered boards lamination apparatus according to any one of claims 6 or 14, **characterized in that** the suction head device is located with the suction head near a corner of the upper sheet of veneer when effecting lifting of the sheet of veneer, preferably a corner facing in the transport direction of the first conveyor.

16. A veneered boards lamination apparatus according to any one of claims 6 to 15, **characterized by** a control unit controlling the lifting action of the suction head devices in the first section.

17. A veneered boards lamination apparatus according to claim 16, **characterized in that** the suction head device is connected to a vacuum source in which the vacuum level can be adjusted.

18. A veneered boards lamination apparatus according to claim 16 and 17, **characterized in that** a number of preset vacuum levels can be stored in the control unit for subsequent selection in dependency of the sizes of the veneer sheets to be lifted.

19. A veneered boards lamination apparatus according to any one of claims 16 to 18, **characterized in that** the control unit is set to activate the lifting head devices in the first section to place bottom veneer sheets onto the first conveyor while other bottom veneer sheets are located in the second station.
